# EUROPEAN PATENT SPECIFICATION

(11) **EP 2 925 065 B1**
(45) Date of publication and mention of the grant of the patent: **15.11.2017**
(21) Application number: 12890979.3
(22) Date of filing: 28.12.2012
(51) Int. Cl.: H04W 76/04, H04W 92/20

(54) **COORDINATING COMMUNICATION METHOD, USER EQUIPMENT, AND BASE STATION**
KOORDINATIONSKOMMUNIKATIONSVERFAHREN, BENUTZERGERÄT UND BASISSTATION
PROCÉDÉ DE COMMUNICATION DE COORDINATION, ÉQUIPEMENT D'UTILISATEUR ET STATION DE BASE

(43) Date of publication of application: 30.09.2015
(73) Proprietor: Huawei Technologies Co., Ltd., Longgang District Shenzhen, Guangdong 518129 (CN)
(72) Inventor: YANG, Fei, Shenzhen Guangdong 518129 (CN); LI, Yue, Shenzhen Guangdong 518129 (CN); GUO, Xiaolong, Shenzhen Guangdong 518129 (CN); LI, Bingzhao, Shenzhen Guangdong 518129 (CN)
(74) Representative: Pfenning, Meinig & Partner mbB
(86) International application number: PCT/CN2012/087914
(87) International publication number: WO 2014/101140

(56) References cited:
- WO-A1-2011/132818
- WO-A2-2012/091418
- CN-A- 102 421 068
- CN-A- 102 684 845
- CN-A- 102 761 353
- US-A1- 2012 142 345

## Description

### TECHNICAL FIELD

The present invention relates to the field of communications technologies, and in particular, to a cooperative communication method, user equipment, and a base station.

### BACKGROUND

With the rapid development of global communications technologies, mobile communications systems of different standards emerge, such as a Global System for Mobile Communications (Global System of Mobile communication, GSM for short) network, a general packet radio service technical (General Packet Radio Service, GPRS for short) network, a Wideband Code Division Multiple Access (Wideband Code Division Multiple Access, WCDMA for short) network, a CDMA-2000 network, a Time Division-Synchronous Code Division Multiple Access (Time Division-Synchronous Code Division Multiple Access, TD-SCDMA for short) network, and a Worldwide Interoperability for Microwave Access (Worldwide Interoperability for Microwave Access, and WiMAX for short) network. Generally, these mobile communications systems further provide a data communication service in addition to providing a voice communication service. However, current communication means are all operated based on a single user equipment (User Equipment, UE for short). Even if an enhanced communication means is used to increase reliability and/or a throughput of data transmission of user equipment, the enhanced communication means is still operated based on a single user equipment. Once an environment of user equipment itself deteriorates, a throughput and/or reliability of data transmission of the user equipment decreases rapidly.

To improve the foregoing situations, multi-user cooperative communication may be established for UE whose environment deteriorates, so that data transmission efficiency of the UE whose environment deteriorates is improved with assistance from another UE. In a scenario of multi-user cooperative communication, a cooperative communication establishment process can be completed only when two UEs are controlled by a same base station. When the two UEs are separately controlled by different base stations, cooperative communication cannot be established between the two UEs by using an existing synthesis process.

US 2012/0142345 A1 discusses a cooperative communication technology of a target terminal and a cooperative terminal. In an environment in which interference exists between cells, cooperation between terminals is be performed in order to improve quality of signals that are received from a base station. A method includes requesting at least one neighboring terminal for cooperation based on signal quality between the target terminal and a serving base station of the target terminal, obtaining, from the at least one neighboring terminal, information about a cooperation mode between the target terminal and the at least one neighboring terminal and information about an amount of transmission power to be used by the at least one neighboring terminal, based on the cooperation mode, selecting a cooperative terminal to cooperate with the target terminal from among the at least one neighboring terminal based on the information, and performing cooperative communication with the cooperative terminal based on a cooperation mode corresponding to the cooperative terminal.

WO 2012/091418 A2 discusses a method for checking whether D2D communication between devices for performing D2D communication is possible, and a method for estimating the proximity of devices to base stations and the proximity of devices to one another for reusing wireless resources in device-to-device communication and terminal relay communication. WO2011/132818 A1 discusses a method and apparatus for direction communications in a wireless communication system. In the direct communication support method of a wireless communication system according to one embodiment, when a base station receives a direct communication request message from a first terminal to request a direct communication with a second terminal without going through the base station, the base station then allocates resources to be used for the direct communication and transmits resource allocation information to the first and second terminals.

### SUMMARY

A cooperative communication method and a base station are provided, which can solve a problem that cooperative communication cannot be established between two UEs by using an existing synthesis process when the two UEs are separately controlled by different base stations, thereby increasing a throughput and reliability of a communications system. The invention is captured in the claims.

According to a first aspect, a cooperative communication method is provided, including:
receiving, by a first base station, a pairing identifier sent by a first user equipment UE served by the first base station wherein the pairing identifier comprises at least an identifier of a second UE served by a second base station;
   waiting, by the first base station, for the second base station to broadcast the pairing identifier; receiving, by the first base station, the pairing identifier broadcast by a second base station;
sending, by the first base station, a pairing request to the second base station for performing radio resource radio resource control, RRC, connection reconfiguration for establishing a cooperative communication on the second UE, where the pairing request includes at least the identifier and bearer setup information for the second UE, wherein the identifier of the second UE is configured to determine the second UE by the second base station;
receiving, by the first base station, a pairing acknowledgment message sent by the second base station; and
performing, by the first base station, RRC connection reconfiguration on the first UE for establishing a cooperative communication.

In a first possible implementation manner, the first UE is UE that receives data after establishing the cooperative communication, and the second UE is UE that assists the first UE in receiving the data after establishing the cooperative communication.

According to a second aspect, the cooperative communication method further includes:
receiving, by the second base station, the pairing identifier sent by the second UE wherein the pairing identifier comprises at least the identifier of the second UE; broadcasting, by the second base station, the pairing identifier, wherein the pairing identifier is used for the second base station to pair with the first base station,
   receiving, by the second base station, a pairing request sent by the first base station, where the pairing request includes at least an identifier and bearer setup information for the second UE served by the second base station;
sending, by the second base station, a pairing acknowledgment message to the first base station;
determining, by the second base station, the second UE according to the identifier of the second UE; and
performing, by the second base station, radio resource control RRC connection reconfiguration on the second UE according to the bearer setup information.

According to a third aspect, the cooperative communication method further includes:
receiving, by the first UE served by a first base station, a pairing identifier sent by the second UE served by the second base station wherein the pairing identifier comprises at least an identifier of the second UE served by the second base station;
sending, by the first UE, the pairing identifier to the first base station; and
receiving, by the first UE, a radio resource control RRC connection reconfiguration message from the first base station, and performing RRC connection reconfiguration.

According to a fourth aspect, a base station is provided, including:
a receiving unit, configured to receive a pairing identifier sent by a first user equipment UE served by the base station, wherein the pairing identifier comprises at least an identifier of a second UE served by a second base station, the receiving unit configured to wait for the second base station to broadcast the pairing identifier; the receiving unit configured to receive the pairing identifier broadcast by the second base station; a sending unit, configured to send a pairing request to the second base station for performing radio resource radio resource control, RRC, connection reconfiguration for establishing a cooperative communication on the second UE, according to the identifier of the second UE and the identifier of the second base station serving the second UE that are received by the receiving unit, where the pairing request includes at least the identifier and bearer setup information for the second UE, wherein the pairing request comprises at least the identifier and bearer setup information for the second UE, wherein the identifier of the second UE is configured to determine the second UE by the second base station; wherein the receiving unit is further configured to receive a pairing acknowledgment message sent by the second base station; and
a reconfiguring unit, configured to perform RRC connection reconfiguration for establishing a cooperative communication on the first UE after the receiving unit receives the pairing acknowledgment message.

In a first possible implementation manner, the first UE is UE that receives data after establishing the cooperative communication, and the second UE is UE that assists the first UE in receiving the data after establishing the cooperative communication.

According to a fifth aspect, a base station is provided, including:
a receiving unit, configured to receive a pairing identifier sent by a second user equipment UE served by the base station, wherein the pairing identifier comprises at least the identifier of the second UE,
a broadcasting unit), configured to broadcast the pairing identifier after receiving the pairing identifier by the receiving unit, wherein the pairing identifier is used for the base station to pair with a first base station;
wherein the receiving unit is further configured to receive a pairing request sent by a first base station, where the pairing request includes at least an identifier and bearer setup information of the second UE served by the base station;
a sending unit, configured to send a pairing acknowledgment message to the first base station according to the pairing request received by the receiving unit;
a determining unit, configured to determine the second UE according to the identifier of the second UE in the pairing request received by the receiving unit;
a reconfiguring unit, configured to perform, according to the bearer setup information in the pairing request received by the receiving unit, radio resource control RRC connection reconfiguration for establishing a cooperative communication on the second UE determined by the determining unit.

According to a seventh aspect, a base station is provided, including:
a receiver, configured to receive an identifier of second UE and an identifier of a second base station serving the second UE that are sent by first user equipment UE served by the base station, or receive a pairing identifier broadcast by a second base station, where the pairing identifier includes at least an identifier of the second UE; and configured to receive a pairing acknowledgment message sent by the second base station;
a sender, configured to send a pairing request to the second base station according to the identifier of the second UE and the identifier of the second base station serving the second UE that are received by the receiver, where the pairing request includes at least the identifier and bearer setup information of the second UE, so that the second base station sets up a bearer to the base station according to the bearer setup information, determines the second UE according to the identifier of the second UE, and performs radio resource control RRC connection reconfiguration on the second UE; and
a processor, configured to perform RRC connection reconfiguration on the first UE after the receiver receives the pairing acknowledgment message.

In a first possible implementation manner, the first UE is UE that receives data, and the second UE is UE that assists the first UE in receiving the data.

According to an eighth aspect, a base station is provided, including:
a receiver, configured to receive a pairing request sent by a first base station, where the pairing request includes at least an identifier and bearer setup information of second user equipment UE served by the base station;
a sender, configured to send a pairing acknowledgment message to the first base station according to the pairing request received by the receiver; and
a processor, configured to determine the second UE according to the identifier of the second UE in the pairing request received by the receiver; and configured to perform radio resource control RRC connection reconfiguration on the second UE according to the bearer setup information in the pairing request received by the receiver.

In a first possible implementation manner, the sender is further configured to broadcast the pairing identifier, where the pairing identifier is used for the base station to pair with the first base station, so that the first base station sends the pairing request to the base station after receiving the pairing identifier, where the pairing identifier includes at least the identifier of the second UE.

When two UEs are separately controlled by different base stations, a cooperative communication relationship cannot be established between the two UEs by using a process in the prior art. Compared with the prior art, the embodiments of the present invention have the following advantages: First UE acquires an identifier of second UE and an identifier of a second base station from the second UE by using a short range link; a first base station acquires the identifier of the second UE and the identifier of the second base station from the first UE, sends a pairing request to the second base station according to the identifier of the second base station, where the identifier of the second UE is carried, so that the second base station determines the second UE among UEs controlled by the second base station itself and completes RRC connection reconfiguration on the second UE; finally, the first base station completes RRC connection reconfiguration on the first UE, so as to establish cooperative communication between the first UE and the second UE. Alternatively, first UE and second UE exchange a pairing identifier by using a short range link, and send the pairing identifier to a first base station and a second base station, so that the first base station completes pairing with the second base station according to the pairing identifier; finally, the first base station completes RRC connection reconfiguration on the first UE, and the second base station completes RRC connection reconfiguration on the second UE, so as to establish cooperative communication between the first UE and the second UE. In this way, a cooperative communication relationship is established between the two UEs controlled by the two different base stations, thereby increasing a throughput and reliability of a communications system.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method according to an embodiment of the present invention;
FIG. 2 is a flowchart of a method according to still another embodiment of the present invention;
FIG. 3 is a flowchart of a method according to still another embodiment of the present invention;
FIG. 4 is a flowchart of a method according to still another embodiment of the present invention;
FIG. 5 is a flowchart of a method according to still another embodiment of the present invention;
FIG. 6 is a schematic structural diagram of a base station according to still another embodiment of the present invention;
FIG. 7 and FIG. 8 are schematic structural diagrams of a base station according to still another embodiment of the present invention;
FIG. 9 is a schematic structural diagram of user equipment according to still another embodiment of the present invention;
FIG. 10 is a schematic structural diagram of a base station according to still another embodiment of the present invention;
FIG. 11 is a schematic structural diagram of a base station according to still another embodiment of the present invention;
FIG. 12 is a schematic structural diagram of a base station according to still another embodiment of the present invention; and
FIG. 13 and FIG. 14 are schematic diagrams of a data splitting system according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To increase a throughput and/or reliability of data transmission of user equipment, a short range communications technology supported by the user equipment itself may be used. For example, almost all smartphones can support both a short range communications technology (such as WiFi or BlueTooth) and a cellular communications technology (such as LTE, 3G UMTS or CDMA, 2G GSM, or WiMAX). As an example, the cellular technology is LTE and the short range communications technology is WiFi. In a scenario in which there is a single network node and cooperative communication is established among multiple users, which is also referred to as a multi-user cooperative communication (Multiple UEs Cooperative Communication, MUCC for short) scenario, when at least two UEs both have a feature of supporting both LTE and WiFi, to increase reliability and a throughput, a MUCC relationship may be established between the at least two UEs, that is, when one UE of the at least two UEs needs to send or receive data, another UE except the one UE may provide support and assist the one UE in communication. For example, the one UE is named as benefit UE, served UE, or assisted UE, and the another UE except the one UE is named as supporting UE, serving UE, or assisting UE. By means of assistive transmission of the supporting UE, reliability and a throughput of communication of the benefit UE can be increased.

It should be noted that: the benefit UE is a final sending party of uplink data or a final receiving party of downlink data (from a perspective of a cellular), and for a bearer, there is generally only one benefit UE; and supporting UE is UE configured to assist the benefit UE in performing data forwarding, and for a bearer of the benefit UE, there may be multiple supporting UEs. Specifically, using supporting UE and benefit UE as an example, concepts of the benefit UE and the supporting UE are defined from a perspective of a bearer of the benefit UE. For example, UE1 and UE2 form MUCC, and UE1 and UE2 may assist each other in communication; in this way, from a perspective of a bearer of UE1, UE2 may support the bearer of UE1, and then UE1 is the benefit UE, and UE2 is the supporting UE. Meanwhile, UE1 may also support a bearer of UE2, and then from a perspective of this bearer of UE2, UE2 is the benefit UE, and UE1 is the supporting UE. Further, using supporting UE and benefit UE as an example, when the foregoing UEs are within a same short range connection scope, a network may separately send downlink data to the foregoing supporting UE and benefit UE (an optimization method is that a network scheduler always selects UE with an optimal wireless link condition at a current moment, and sends the downlink data to the UE), and when the network sends the downlink data to the supporting UE, the supporting UE receiving the data sends the data to the benefit UE by means of short range communication (for example, WiFi). In addition, a part of data may also reach the benefit UE directly by using a base station, and the benefit UE performs data merging on the part of data that is directly received and a part of data forwarded by another UE. Similarly, uplink data of the benefit UE may also be sent to the network by the benefit UE itself or another supporting UE, and then the network performs data merging to complete cooperative communication between the UEs. Therefore, by means of assistive transmission of the supporting UE, reliability and a throughput of communication of the benefit UE are increased.

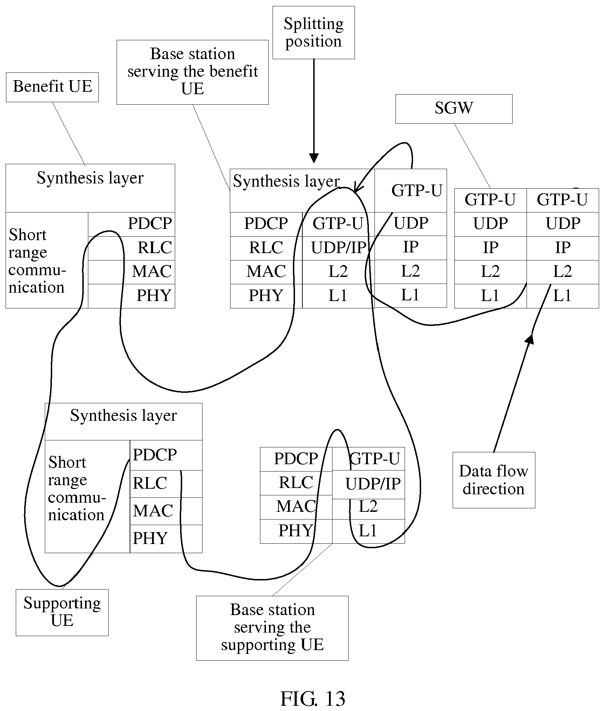

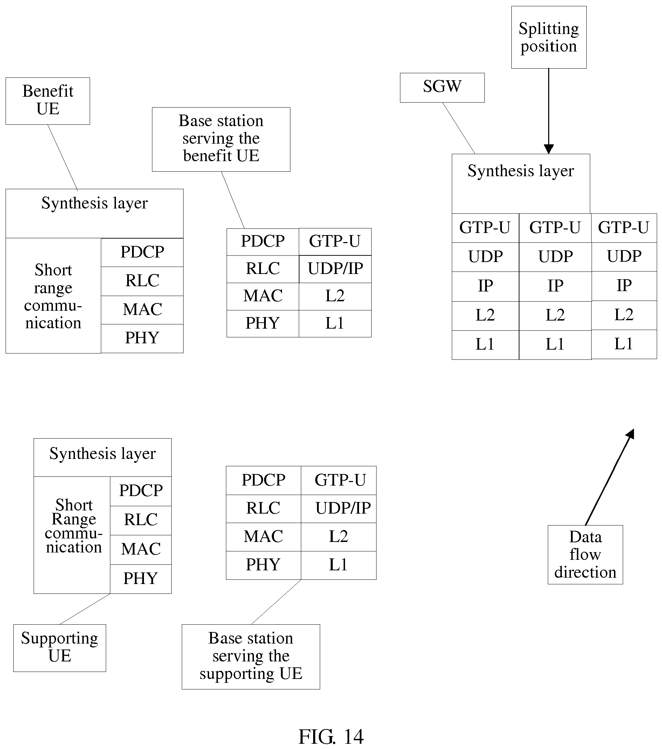

Optionally, in the embodiments of the present invention, in a scenario in which cooperative communication is established, user-plane data splitting occurs in a base station serving the benefit UE. A protocol stack of the cooperative communication is shown in FIG. 13, where a synthesis layer is responsible for data splitting, mapping, and merging. Optionally, user-plane data splitting may also occur on an SGW. A protocol stack of the cooperative communication is shown in FIG. 14, where a synthesis layer is responsible for data splitting, mapping, and merging.

To make advantages of the technical solutions of the present invention clearer, the following describes the present invention in detail with reference to the accompanying drawings and the embodiments.

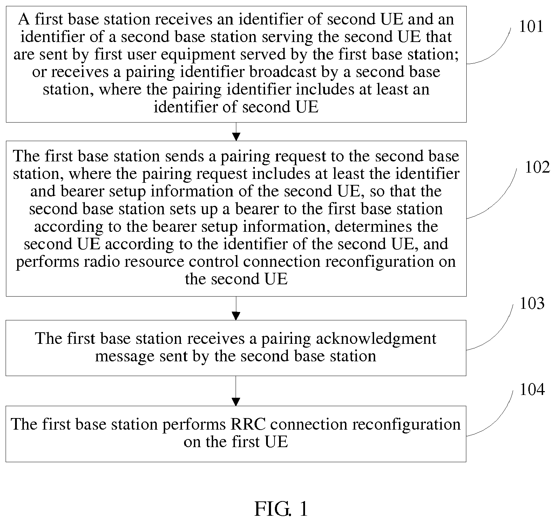

An embodiment of the present invention provides a cooperative communication method. As shown in FIG. 1, the method includes:

101: A first base station receives an identifier of second UE and an identifier of a second base station serving the second UE that are sent by first user equipment (User Equipment, UE for short) served by the first base station; or receives a pairing identifier broadcast by a second base station, where the pairing identifier includes at least an identifier of the second UE.

102: The first base station sends a pairing request to the second base station, where the pairing request includes at least the identifier and bearer setup information of the second UE, so that the second base station sets up a bearer to the first base station according to the bearer setup information, determines the second UE according to the identifier of the second UE, and performs radio resource control (Radio Resource Control, RRC for short) connection reconfiguration on the second UE.

103: The first base station receives a pairing acknowledgment message sent by the second base station.
104: The first base station performs RRC connection reconfiguration on the first UE.

The first UE is UE that receives data, and the second UE is UE that assists the first UE in receiving the data.

When a first UE and a second UE are separately controlled by different base stations, a cooperative communication relationship cannot be established between the two UEs by using a process in the prior art. Compared with the prior art, this embodiment of the present invention has the following advantages: A first base station receives an identifier of the second UE and an identifier of a second base station that are sent by the first UE, or receives a pairing identifier broadcast by a second base station; the first base station sends a pairing request to the second base station, where the pairing request carries the identifier of the second UE, so that the second base station determines the second UE according to the identifier of the second UE and performs RRC connection reconfiguration on the second UE; and the first base station performs RRC connection reconfiguration on the first UE after receiving a pairing acknowledgment message sent by the second base station. In this way, a cooperative communication relationship can be established between the two UEs controlled by the two different base stations, thereby increasing a throughput and reliability of a communications system.

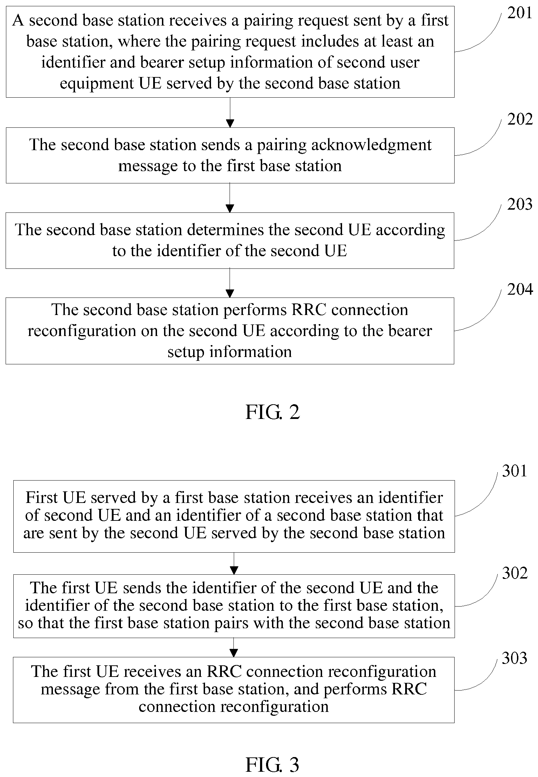

Still another embodiment of the present invention provides a cooperative communication method. As shown in FIG. 2, the method includes:
201: A second base station receives a pairing request sent by a first base station, where the pairing request includes at least an identifier and bearer setup information of second user equipment UE served by the second base station.
202: The second base station sends a pairing acknowledgment message to the first base station.
203: The second base station determines the second UE according to the identifier of the second UE.
204: The second base station performs RRC connection reconfiguration on the second UE according to the bearer setup information.

Further, the method further includes: broadcasting, by the second base station, a pairing identifier, where the pairing identifier is used for the second base station to pair with the first base station, so that the first base station sends the pairing request to the second base station after receiving the pairing identifier, where the pairing identifier includes at least the identifier of the second UE.

When a first UE and a second UE are separately controlled by different base stations, a cooperative communication relationship cannot be established between the two UEs by using a process in the prior art. Compared with the prior art, this embodiment of the present invention has the following advantages: A second base station receives a pairing request sent by a first base station, determines the second UE according to an identifier of the second UE in the pairing request, and completes RRC connection reconfiguration on the second UE, so that cooperative communication is implemented between first UE and the second UE after the first base station completes RRC connection reconfiguration on the first UE. In this way, a cooperative communication relationship can be established between the two UEs controlled by the two different base stations, thereby increasing a throughput and reliability of a communications system.

Still another embodiment of the present invention provides a cooperative communication method. As shown in FIG. 3, the method includes:
301: First UE served by a first base station receives an identifier of second UE and an identifier of a second base station that are sent by the second UE served by the second base station.
302: The first UE sends the identifier of the second UE and the identifier of the second base station to the first base station, so that the first base station pairs with the second base station.
303: The first UE receives an RRC connection reconfiguration message from the first base station, and performs RRC connection reconfiguration.

The first UE is UE that receives data, and the second UE is UE that assists the first UE in receiving the data.

When a first UE and a second UE are separately controlled by different base stations, a cooperative communication relationship cannot be established between the two UEs by using a process in the prior art. Compared with the prior art, this embodiment of the present invention has the following advantages: The first UE served by a first base station receives an identifier of the second UE and an identifier of a second base station that are sent by the second UE served by the second base station, and sends the identifier of the second UE and the identifier of the second base station to the first base station, so that the first base station pairs with the second base station; the first UE receives an RRC connection reconfiguration message from the first base station, and performs RRC connection reconfiguration, so that RRC connection reconfiguration on a first UE side can be completed; after the second base station completes RRC connection reconfiguration on the second UE, a cooperative communication relationship can be established between the two UEs controlled by the two different base stations, thereby increasing a throughput and reliability of a communications system.

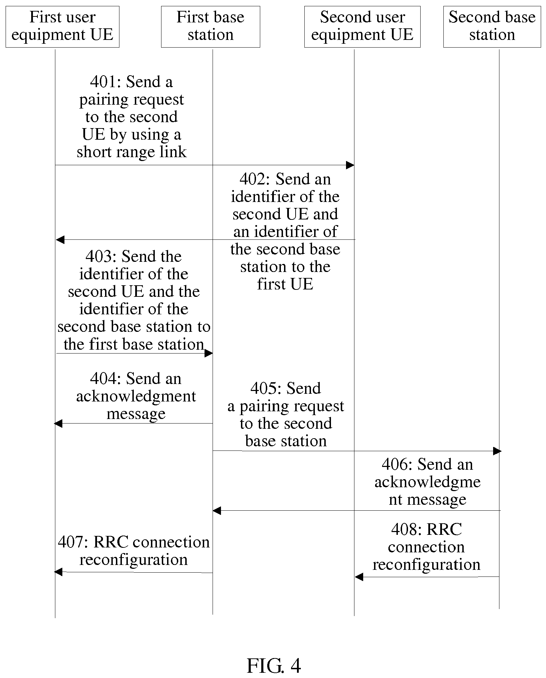

Still another embodiment of the present invention provides a cooperative communication method. First UE establishes a pairing relationship with second UE by using a short range link, and data sent to the first UE is split in a first base station serving the first UE. As shown in FIG. 4, the method includes:
401: The first UE sends a pairing request to the second UE by using the short range link.
   The short range link may be a link or the like established by means of Bluetooth or wifi.
402: The second UE sends an identifier of the second UE and an identifier of a second base station to the first UE according to the pairing request.
   For example, an identifier of the first UE may be a C-RNTI, and the identifier of the second base station may be a physical cell ID or an eNB ID.
403: The first UE sends the identifier of the second UE and the identifier of the second base station to the first base station.
404: The first base station sends an acknowledgment message to the first UE.
405: The first base station sends a pairing request to the second base station.
   The pairing request further includes: the identifier and bearer setup information of the second UE. For example, the bearer setup information is quality of service (Quality of Service, QoS for short) information. The identifier of the second UE is sent, so that the second base station can determine the second UE among multiple UEs connected to the second base station; bearer QoS information is used for the second base station to set up a bearer to the first base station, so that data splitting is performed for the first UE.
406: The second base station sends a pairing acknowledgment message to the first base station.
407: The first base station performs RRC connection reconfiguration on the first UE.
408: The second base station performs RRC connection reconfiguration on the second UE.

It should be noted that, the step process in this embodiment is not limited to a scenario in which a first UE side initiates a pairing request, but also applicable to a scenario in which a second UE side initiates a pairing request.

When a first UE and a second UE are separately controlled by different base stations, a cooperative communication relationship cannot be established between the two UEs by using a process in the prior art. Compared with the prior art, this embodiment of the present invention has the following advantages: The first UE acquires an identifier of the second UE and an identifier of a second base station from the second UE by using a short range link; a first base station acquires the identifier of the second UE and the identifier of the second base station from the first UE, and sends a pairing request to the second base station according to the identifier of the second base station, where the identifier of the second UE is carried, so that the second base station determines the second UE among UEs controlled by the second base station itself and completes RRC connection reconfiguration on the second UE; finally, the first base station completes RRC connection reconfiguration on the first UE, so as to implement cooperative communication between the first UE and the second UE. In this way, a cooperative communication relationship can be established between the two UEs controlled by the two different base stations, thereby increasing a throughput and reliability of a communications system.

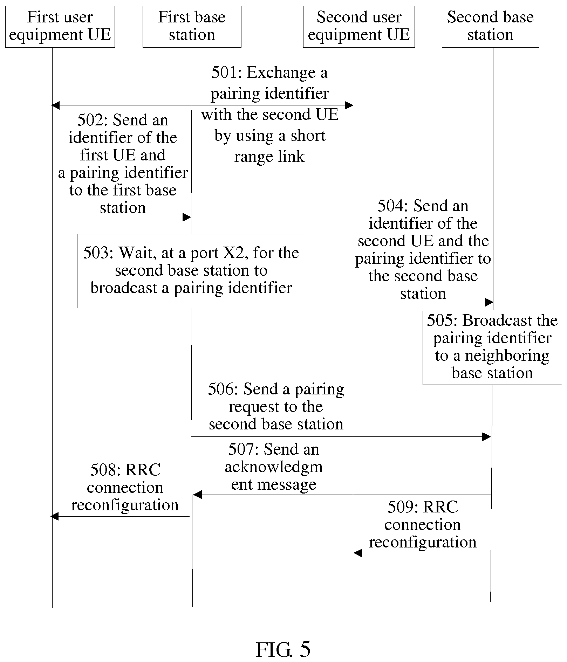

Still another embodiment of the present invention provides a cooperative communication method. First UE and second UE exchange a pairing identifier by using a short range link, and a pairing procedure is completed by means of broadcasting between a first base station and a second base station, and data sent to the first UE is split in the first base station serving the first UE. As shown in FIG. 5, the method includes:
501: The first UE and the second UE exchange a pairing identifier by using the short range link.
   The short range link may be a link or the like established by means of Bluetooth or wifi. The pairing identifier is used to indicate that the first UE pairs with the second UE to establish a synthetic communication relationship.
502: The first UE sets up a bearer and sends an identifier of the first UE and the pairing identifier to the first base station.
   The identifier of the first UE is sent to the first base station, so that the first base station learns that the first UE is benefit UE (the identifier includes information about whether the first UE is benefit UE or supporting UE). If the first UE is benefit UE, the first base station performs a procedure in step 503; and if the first UE is supporting UE, the first base station performs a procedure in step 505.
503: The first base station waits, at a port X2, for the second base station to broadcast a pairing identifier.
   The pairing identifier carries a C-RNTI identifier of the second UE.
504: The second UE sets up a bearer and sends an identifier of the second UE and the pairing identifier to the second base station.
   The identifier of the second UE is sent to the second base station, so that the second base station learns that the second UE is supporting UE (the identifier includes information about whether the second UE is benefit UE or supporting UE). The second base station broadcasts the received pairing identifier to a neighboring base station after learning that the second UE is supporting UE.
505: The second base station broadcasts the pairing identifier to a neighboring base station.
506: After receiving the pairing identifier broadcast by the second base station, the first base station determines, by means of comparison, whether the pairing identifier sent by the first UE corresponds to the pairing identifier broadcast by the second base station, and if the two pairing identifiers correspond, sends a pairing request to the second base station.
   Optionally, if the two pairing identifiers do not correspond, the process ends.
   The pairing request further includes: the identifier and bearer setup information of the second UE. For example, the bearer setup information is QoS information. The identifier of the second UE is sent, so that the second base station can determine the second UE among multiple UEs connected to the second base station; bearer QoS information is used for the second base station to set up a bearer to the first base station, so that data splitting is performed for the first UE.
507: The second base station sends a pairing acknowledgment message to the first base station.
508: The first base station performs RRC connection reconfiguration on the first UE.
509: The second base station performs RRC connection reconfiguration on the second UE.

When a first UE and a second UE are separately controlled by different base stations, a cooperative communication relationship cannot be established between the two UEs by using a process in the prior art. Compared with the prior art, this embodiment of the present invention has the following advantages: The first UE and the second UE exchange a pairing identifier by using a short range link, and the pairing identifier is sent to a first base station and a second base station, so that the first base station completes pairing with the second base station according to the pairing identifier; finally, the first base station completes RRC connection reconfiguration on the first UE, and the second base station completes RRC connection reconfiguration on the second UE, thereby establishing cooperative communication between the first UE and the second UE. In this way, a cooperative communication relationship can be established between the two UEs controlled by the two different base stations, thereby increasing a throughput and reliability of a communications system.

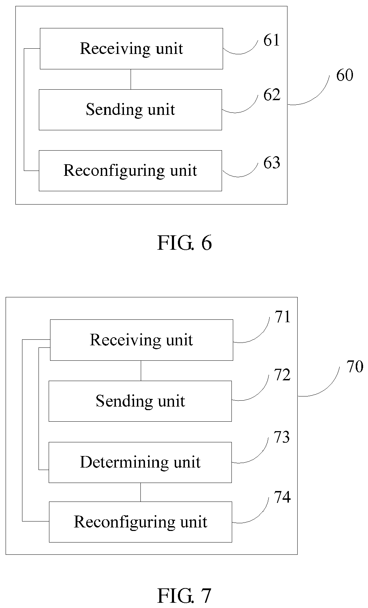

Still another embodiment of the present invention provides a base station 60. As shown in FIG. 6, the base station 60 includes:
a receiving unit 61, configured to receive an identifier of second UE and an identifier of a second base station serving the second UE that are sent by first user equipment UE served by the base station 60, or receive a pairing identifier broadcast by a second base station, where the pairing identifier includes at least an identifier of the second UE; and configured to receive a pairing acknowledgment message sent by the second base station;
a sending unit 62, configured to send a pairing request to the second base station according to the identifier of the second UE and the identifier of the second base station serving the second UE that are received by the receiving unit 61, where the pairing request includes at least the identifier and bearer setup information of the second UE, so that the second base station sets up a bearer to the base station 60 according to the bearer setup information, determines the second UE according to the identifier of the second UE, and performs radio resource control RRC connection reconfiguration on the second UE; and
a reconfiguring unit 63, configured to perform RRC connection reconfiguration on the first UE after the receiving unit 61 receives the pairing acknowledgment message.

The first UE is UE that receives data, and the second UE is UE that assists the first UE in receiving the data.

For a working process of the base station 60 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: A base station 60 receives an identifier of second UE and an identifier of a second base station that are sent by first UE; or receives a pairing identifier broadcast by a second base station; the base station 60 sends a pairing request to the second base station, where the pairing request carries the identifier of the second UE, so that the second base station determines the second UE according to the identifier of the second UE and performs RRC connection reconfiguration on the second UE; and the first base station performs RRC connection reconfiguration on the first UE after receiving a pairing acknowledgment message sent by the second base station. In this way, a cooperative communication relationship can be established between the two UEs controlled by the two different base stations, thereby increasing a throughput and reliability of a communications system.

Still another embodiment of the present invention provides a base station 70. As shown in FIG. 7, the base station 70 includes:
a receiving unit 71, configured to receive a pairing request sent by a first base station, where the pairing request includes at least an identifier and bearer setup information of second user equipment UE served by the base station 70;
a sending unit 72, configured to send a pairing acknowledgment message to the first base station according to the pairing request received by the receiving unit 71;
a determining unit 73, configured to determine the second UE according to the identifier of the second UE in the pairing request received by the receiving unit 71; and
a reconfiguring unit 74, configured to perform, according to the bearer setup information in the pairing request received by the receiving unit 71, radio resource control RRC connection reconfiguration on the second UE determined by the determining unit 73.

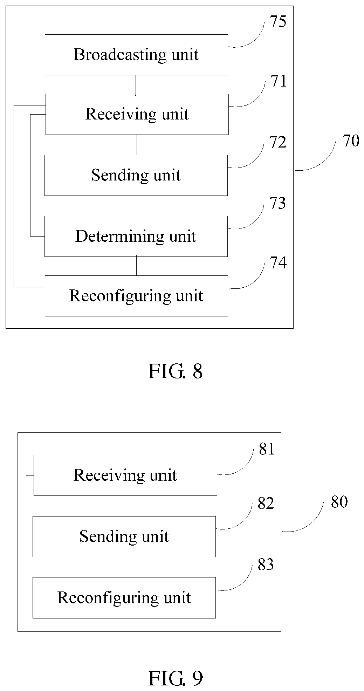

Further, as shown in FIG. 8, the base station 70 further includes:
a broadcasting unit 75, configured to broadcast the pairing identifier, where the pairing identifier is used for the base station 70 to pair with the first base station, so that the first base station sends the pairing request to the base station 70 after receiving the pairing identifier, where the pairing identifier includes at least the identifier of the second UE.

For a working process of the base station 70 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: A base station 70 receives a pairing request sent by a first base station, determines the second UE according to an identifier of the second UE in the pairing request, and completes RRC connection reconfiguration on the second UE, so that cooperative communication is implemented between the first UE and the second UE after the first base station completes RRC connection reconfiguration on the first UE. In this way, a cooperative communication relationship can be established between the two UEs controlled by the two different base stations, thereby increasing a throughput and reliability of a communications system.

Still another embodiment of the present invention provides user equipment UE 80. As shown in FIG. 9, the user equipment 80 includes:
a receiving unit 81, configured to receive an identifier of second UE and an identifier of a second base station that are sent by the second UE served by the second base station;
a sending unit 82, configured to send, to a first base station, the identifier of the second UE and the identifier of the second base station that are received by the receiving unit 81, so that the first base station pairs with the second base station; and
a reconfiguring unit 83, configured to perform, after the receiving unit 81 receives a radio resource control RRC connection reconfiguration message sent by the first base station, RRC connection reconfiguration according to the RRC connection reconfiguration message received by the receiving unit 81.

The UE 80 is UE that receives data, and the second UE is UE that assists the UE 80 in receiving the data.

For a working process of the user equipment 80 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: UE 80 served by a first base station receives an identifier of second UE and an identifier of a second base station that are sent by the second UE served by the second base station, and sends the identifier of the second UE and the identifier of the second base station to the first base station, so that the first base station pairs with the second base station; the UE 80 receives an RRC connection reconfiguration message from the first base station, and performs RRC connection reconfiguration, so that RRC connection reconfiguration on a UE 80 side can be completed; after the second base station completes RRC connection reconfiguration on the second UE, a cooperative communication relationship can be established between the two UEs controlled by the two different base stations, thereby increasing a throughput and reliability of a communications system.

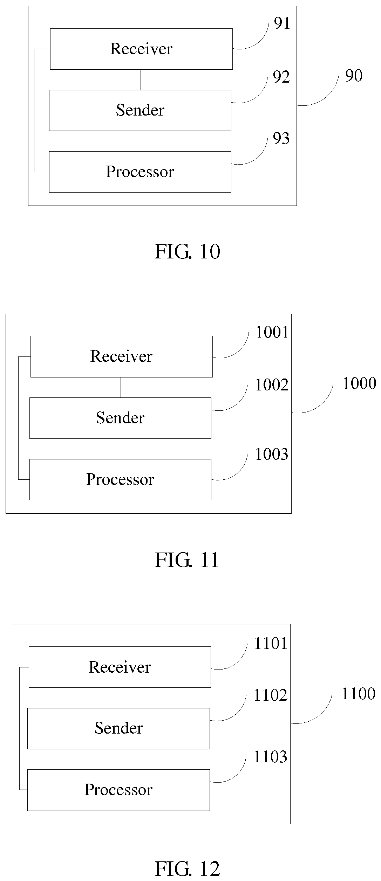

Still another embodiment of the present invention provides a base station 90. As shown in FIG. 10, the base station 90 includes:
a receiver 91, configured to receive an identifier of second UE and an identifier of a second base station serving the second UE that are sent by first user equipment UE served by the base station 90, or receive a pairing identifier broadcast by a second base station, where the pairing identifier includes at least an identifier of the second UE; and configured to receive a pairing acknowledgment message sent by the second base station;
a sender 92, configured to send a pairing request to the second base station according to the identifier of the second UE and the identifier of the second base station serving the second UE that are received by the receiver 91, where the pairing request includes at least the identifier and bearer setup information of the second UE, so that the second base station sets up a bearer to the base station 90 according to the bearer setup information, determines the second UE according to the identifier of the second UE, and performs radio resource control RRC connection reconfiguration on the second UE; and
a processor 93, configured to perform RRC connection reconfiguration on the first UE after the receiver 91 receives the pairing acknowledgment message.

The first UE is UE that receives data, and the second UE is UE that assists the first UE in receiving the data.

For a working process of the base station 90 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: A base station 90 receives an identifier of the second UE and an identifier of a second base station that are sent by the first UE; or receives a pairing identifier broadcast by a second base station; the base station 90 sends a pairing request to the second base station, where the pairing request carries the identifier of the second UE, so that the second base station determines the second UE according to the identifier of the second UE and performs RRC connection reconfiguration on the second UE; and the first base station performs RRC connection reconfiguration on the first UE after receiving a pairing acknowledgment message sent by the second base station. In this way, a cooperative communication relationship can be established between the two UEs controlled by the two different base stations, thereby increasing a throughput and reliability of a communications system.

Still another embodiment of the present invention provides a base station 1000. As shown in FIG. 11, the base station 1000 includes:
a receiver 1001, configured to receive a pairing request sent by a first base station, where the pairing request includes at least an identifier and bearer setup information of second user equipment UE served by the base station;
a sender 1002, configured to send a pairing acknowledgment message to the first base station according to the pairing request received by the receiver 1001; and;
a processor 1003, configured to determine the second UE according to the identifier of the second UE in the pairing request received by the receiver 1001; and configured to perform radio resource control RRC connection reconfiguration on the second UE according to the bearer setup information in the pairing request received by the receiver 1001.

Further, the sender 1002 is further configured to broadcast the pairing identifier, where the pairing identifier is used for the base station to pair with the first base station, so that the first base station sends the pairing request to the base station after receiving the pairing identifier, where the pairing identifier includes at least the identifier of the second UE.

For a working process of the base station 1000 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: A base station 1000 receives a pairing request sent by a first base station, determines the second UE according to an identifier of the second UE in the pairing request, and completes RRC connection reconfiguration on the second UE, so that cooperative communication is implemented between the first UE and the second UE after the first base station completes RRC connection reconfiguration on the first UE. In this way, a cooperative communication relationship can be established between the two UEs controlled by the two different base stations, thereby increasing a throughput and reliability of a communications system.

Still another embodiment of the present invention provides user equipment UE 1100. As shown in FIG. 12, the user equipment 1100 includes:
a receiver 1101, configured to receive an identifier of second UE and an identifier of a second base station that are sent by the second UE served by the second base station;
a sender 1102, configured to send, to a first base station, the identifier of the second UE and the identifier of the second base station that are received by the receiver 1101, so that the first base station pairs with the second base station; and
a processor 1103, configured to perform, after the receiver 1101 receives a radio resource control RRC connection reconfiguration message sent by the first base station, RRC connection reconfiguration according to the RRC connection reconfiguration message received by the receiver 1101.

The UE is UE that receives data, and the second UE is UE that assists the UE in receiving the data.

For a working process of the user equipment 1100 provided in this embodiment of the present invention, refer to descriptions in the foregoing method embodiments, and details are not described herein again.

When a first UE and a second UE are separately controlled by different base stations, a cooperative communication relationship cannot be established between the two UEs by using a process in the prior art. Compared with the prior art, this embodiment of the present invention has the following advantages: UE 1100 served by a first base station receives an identifier of the second UE and an identifier of a second base station that are sent by the second UE served by the second base station, and sends the identifier of the second UE and the identifier of the second base station to the first base station, so that the first base station pairs with the second base station; the UE 1100 receives an RRC connection reconfiguration message from the first base station, and performs RRC connection reconfiguration, so that RRC connection reconfiguration on a UE 1100 side can be completed; after the second base station completes RRC connection reconfiguration on the second UE, a cooperative communication relationship can be established between the two UEs controlled by the two different base stations, thereby increasing a throughput and reliability of a communications system.

The user equipment and the base station that are provided in the embodiments of the present invention can implement the method embodiments provided in the foregoing. For specific function implementation, refer to descriptions in the method embodiments, and details are not described herein again. The cooperative communication method, the user equipment, and the base station that are provided in the embodiments of the present invention may be applicable to a situation in which two UEs between which cooperative communication is established are separately controlled by different base stations in a multi-user cooperative communications technology scenario, but the present invention is not limited thereto.

A person of ordinary skill in the art may understand that all or some of the processes of the methods in the embodiments may be implemented by a computer program instructing relevant hardware. The program may be stored in a computer readable storage medium. When the program runs, the processes of the foregoing method embodiments may be performed. The foregoing storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cooperative communication method, comprising:
receiving (101), by a first base station, a pairing identifier sent by a first user equipment UE served by the first base station wherein the pairing identifier comprises at least an identifier of a second UE served by a second base station;
waiting, by the first base station, for the second base station to broadcast the pairing identifier;
receiving, by the first base station, the pairing identifier broadcast by the second base station;
sending (102), by the first base station, a pairing request to the second base station for performing radio resource radio resource control, RRC, connection reconfiguration for establishing a cooperative communication on the second UE, wherein the pairing request comprises at least the identifier and bearer setup information for the second UE, wherein the identifier of the second UE is configured to determine the second UE by the second base station;
receiving (103), by the first base station, a pairing acknowledgment message sent by the second base station; and
performing (104), by the first base station, RRC connection reconfiguration for establishing a cooperative communication on the first UE.

2. The method according to claim 1, wherein the first UE is a UE that receives data after establishing the cooperative communication, and the second UE is a UE that assists the first UE in receiving the data after establishing the cooperative communication.

3. The method according to claim 1 or 2, further comprising:
receiving, by the second base station, the pairing identifier sent by the second UE wherein the pairing identifier comprises at least the identifier of the second UE;
broadcasting, by the second base station, the pairing identifier, wherein the pairing identifier is used for the second base station to pair with the first base station,
receiving (201), by the second base station, a pairing request sent by the first base station, wherein the pairing request comprises at least an identifier and bearer setup information for the second UE served by the second base station;
sending (202), by the second base station, a pairing acknowledgment message to the first base station;
determining, by the second base station, the second UE according to the identifier of the second UE; and
performing (203), by the second base station, radio resource control RRC connection reconfiguration on the second UE according to the bearer setup information.

4. The method according to claim 1 or 3, further comprising:
receiving (301), by the first UE served by a first base station, a pairing identifier sent by the second UE served by the second base station wherein the pairing identifier comprises at least an identifier of the second UE served by the second base station;
sending (302), by the first UE, the pairing identifier to the first base station; and
receiving (303), by the first UE, a radio resource control RRC connection reconfiguration message from the first base station, and performing RRC connection reconfiguration.

5. A base station (60), comprising:
a receiving unit (61), configured to receive a pairing identifier sent by a first user equipment UE served by the base station, wherein the pairing identifier comprises at least an identifier of a second UE served by a second base station, the receiving unit (61) configured to wait for the second base station to broadcast the pairing identifier; the receiving unit (61) configured to receive the pairing identifier broadcast by the second base station;
a sending unit(62), configured to send a pairing request to the second base station for performing radio resource radio resource control, RRC, connection reconfiguration for establishing a cooperative communication on the second UE, according to the identifier of the second UE and the identifier of the second base station serving the second UE that are received by the receiving unit (61), wherein the pairing request comprises at least the identifier and bearer setup information for the second UE, wherein the identifier of the second UE is configured to determine the second UE by the second base station;
wherein the receiving unit (61) is further configured to receive a pairing acknowledgment message sent by the second base station; and
a reconfiguring unit (63), configured to perform RRC connection reconfiguration for establishing a cooperative communication on the first UE after the receiving unit (61) receives the pairing acknowledgment message.

6. The base station according to claim 5, wherein the first UE is UE that receives data after establishing the cooperative communication, and the second UE is UE that assists the first UE in receiving the data after establishing the cooperative communication.

7. A base station, comprising:
a receiving unit (71), configured to receive a pairing identifier sent by a second user equipment UE served by the base station, wherein the pairing identifier comprises at least the identifier of the second UE;
a broadcasting unit (75), configured to broadcast the pairing identifier after receiving the pairing identifier by the receiving unit (71), wherein the pairing identifier is used for the base station to pair with a first base station;
wherein the receiving unit (71) is further configured to receive a pairing request sent by the first base station, wherein the pairing request comprises at least an identifier and bearer setup information of the second UE served by the base station;
a sending unit (72), configured to send a pairing acknowledgment message to the first base station according to the pairing request received by the receiving unit (71);
a determining unit (73), configured to determine the second UE according to the identifier of the second UE in the pairing request received by the receiving unit (71);
a reconfiguring unit (74), configured to perform, according to the bearer setup information in the pairing request received by the receiving unit (71), radio resource control RRC connection reconfiguration for establishing a cooperative communication on the second UE determined by the determining unit (73).

## Patentansprüche

1. Kooperatives Kommunikationsverfahren, das Folgendes umfasst:
Empfangen (101) durch eine erste Basisstation eines Paarbildungsbezeichners, der durch ein erstes Anwendergerät, UE, das durch die erste Basisstation versorgt wird, gesendet wird, wobei der Paarbildungsbezeichner wenigstens einen Bezeichner eines zweiten UE, das durch eine zweite Basisstation versorgt wird, umfasst;
Warten durch die erste Basisstation darauf, dass die zweite Basisstation den Paarbildungsbezeichner rundsendet;
Empfangen durch die erste Basisstation des Paarbildungsbezeichners, der durch die zweite Basisstation rundgesendet wird;
Senden (102) durch die erste Basisstation einer Paarbildungsanforderung zu der zweiten Basisstation zum Ausführen von Funkbetriebsmittel-Funkbetriebsmittelsteuerungs-Verbindungsneukonfiguration, Funkbetriebsmittel-RRC-Verbindungsneukonfiguration, zum Aufbauen einer kooperativen Kommunikation auf dem zweiten UE, wobei die Paarbildungsanforderung wenigstens den Bezeichner und Trägereinstellungsinformationen für das zweite UE umfasst, wobei der Bezeichner des zweiten UE konfiguriert ist, das zweite UE durch die zweite Basisstation zu bestimmen;
Empfangen (103) durch die erste Basisstation einer Paarbildungsquittungsnachricht, die durch die zweite Basisstation gesendet wird; und
Ausführen (104) durch die erste Basisstation von RRC-Verbindungsneukonfiguration zum Aufbauen einer kooperativen Kommunikation auf dem ersten UE.

2. Verfahren nach Anspruch 1, wobei das erste UE ein UE ist, das Daten nach dem Aufbauen der kooperativen Kommunikation empfängt, und das zweite UE ein UE ist, das das erste UE bei dem Empfangen von Daten nach dem Aufbauen der kooperativen Kommunikation unterstützt.

3. Verfahren nach Anspruch 1 oder 2, das ferner Folgendes umfasst:
Empfangen durch die zweite Basisstation des Paarbildungsbezeichners, der durch das zweite UE gesendet wird, wobei der Paarbildungsbezeichner wenigstens den Bezeichner des zweiten UE umfasst;
Rundsenden durch die zweite Basisstation des Paarbildungsbezeichners, wobei der Paarbildungsbezeichner verwendet wird, damit die zweite Basisstation mit der ersten Basisstation ein Paar bilden kann,
Empfangen (201) durch die zweite Basisstation einer Paarbildungsanforderung, die durch die erste Basisstation gesendet wird, wobei die Paarbildungsanforderung wenigstens einen Bezeichner und Trägereinstellungsinformationen für das zweite UE, das durch die zweite Basisstation versorgt wird, umfasst;
Senden (202) durch die zweite Basisstation einer Paarbildungsquittungsnachricht zu der ersten Basisstation;
Bestimmen durch die zweite Basisstation des zweiten UE gemäß dem Bezeichner des zweiten UE; und
Ausführen (203) durch die zweite Basisstation von Funkbetriebsmittelsteuerungs-Verbindungsneukonfiguration, RRC-Verbindungsneukonfiguration, auf dem zweiten UE gemäß den Trägereinstellungsinformationen.

4. Verfahren nach Anspruch 1 oder 3, das ferner Folgendes umfasst:
Empfangen (301) durch das erste UE, das durch eine erste Basisstation versorgt wird, eines Paarbildungsbezeichners, der durch das zweite UE, das durch die zweite Basisstation versorgt wird, gesendet wird, wobei der Paarbildungsbezeichner wenigstens einen Bezeichner des zweiten UE, das durch die zweite Basisstation versorgt wird, umfasst;
Senden (302) durch das erste UE des Paarbildungsbezeichners zu der ersten Basisstation; und
Empfangen (303) durch das erste UE einer Funkbetriebsmittelsteuerungs-Verbindungsneukonfigurationsnachricht, RRC-Verbindungsneukonfigurationsnachricht, von der ersten Basisstation und Ausführen von RRC-Verbindungsneukonfiguration.

5. Basisstation (60), die Folgendes umfasst:
eine Empfangseinheit (61), die konfiguriert ist, einen Paarbildungsbezeichner, der durch ein erstes Anwendergerät, UE, das durch die Basisstation versorgt wird, gesendet wird, zu empfangen, wobei der Paarbildungsbezeichner wenigstens einen Bezeichner eines zweiten UE umfasst, das durch eine zweite Basisstation versorgt wird, wobei die Empfangseinheit (61) konfiguriert ist, darauf zu warten, dass die zweite Basisstation den Paarbildungsbezeichner rundsendet; wobei die Empfangseinheit (61) konfiguriert ist, den Paarbildungsbezeichner, der durch die zweite Basisstation rundgesendet wird, zu empfangen;
eine Sendeeinheit (62), die konfiguriert ist, eine Paarbildungsanforderung zu der zweiten Basisstation zu senden zum Ausführen von Funkbetriebsmittel-Funkbetriebsmittelsteuerungs-Verbindungsneukonfiguration, Funkbetriebsmittel-RRC-Verbindungsneukonfiguration, zum Aufbauen einer kooperativen Kommunikation auf dem zweiten UE, gemäß dem Bezeichner des zweiten UE und dem Bezeichner der zweiten Basisstation, die das zweite UE versorgt, die durch die Empfangseinheit (61) empfangen werden, wobei die Paarbildungsanforderung wenigstens den Bezeichner und Trägereinstellungsinformationen für das zweite UE umfasst, wobei der Bezeichner des zweiten UE konfiguriert ist, das zweite UE durch die zweite Basisstation zu bestimmen;
wobei die Empfangseinheit (61) ferner konfiguriert ist, eine Paarbildungsquittungsnachricht, die durch die zweite Basisstation gesendet wird, zu empfangen; und
eine Neukonfigurierungseinheit (63), die konfiguriert ist, RRC-Verbindungsneukonfiguration zum Aufbauen einer kooperativen Kommunikation auf dem ersten UE auszuführen, nachdem die Empfangseinheit (61) die Paarbildungsquittungsnachricht empfangen hat.

6. Basisstation nach Anspruch 5, wobei das erste UE ein UE ist, das nach dem Aufbauen der kooperativen Kommunikation Daten empfängt, und das zweite UE ein UE ist, das das erste UE nach dem Aufbauen der kooperativen Kommunikation bei dem Empfangen von Daten unterstützt.

7. Basisstation, die Folgendes umfasst:
eine Empfangseinheit (71), die konfiguriert ist, einen Paarbildungsbezeichner zu empfangen, der durch ein zweites Anwendergerät, UE, das durch die Basisstation versorgt wird, gesendet wird, wobei der Paarbildungsbezeichner wenigstens den Bezeichner des zweiten UE umfasst;
eine Rundsendeeinheit (75), die konfiguriert ist, den Paarbildungsbezeichner nach dem Empfangen des Paarbildungsbezeichners durch die Empfangseinheit (71) rundzusenden, wobei der Paarbildungsbezeichner verwendet wird, damit die Basisstation mit einer ersten Basisstation ein Paar bilden kann;
wobei die Empfangseinheit (71) ferner konfiguriert ist, eine Paarbildungsanforderung, die durch die erste Basisstation gesendet wird, zu empfangen, wobei die Paarbildungsanforderung wenigstens einen Bezeichner und Trägereinstellungsinformationen des zweiten UE, das durch die Basisstation versorgt wird, umfasst;
eine Sendeeinheit (72), die konfiguriert ist, eine Paarbildungsquittungsnachricht zu der ersten Basisstation gemäß der durch die Empfangseinheit (71) empfangenen Paarbildungsanforderung zu senden;
eine Bestimmungseinheit (73), die konfiguriert ist, das zweite UE gemäß dem Bezeichner des zweiten UE in der durch die Empfangseinheit (71) empfangenen Paarbildungsanforderung zu bestimmen;
eine Neukonfigurierungseinheit (74), die konfiguriert ist, gemäß den Trägereinstellungsinformationen in der Paarbildungsanforderung, die durch die Empfangseinheit (71) empfangen wird, Funkbetriebsmittelsteuerungs-Verbindungsneukonfiguration, RRC-Verbindungsneukonfiguration, zum Aufbauen einer kooperativen Kommunikation auf dem zweiten UE, das durch die Bestimmungseinheit (73) bestimmt wird, auszuführen.

## Revendications

1. Procédé de communication coopératif, comprenant :
la réception (101), par une première station de base, d'un identifiant d'appariement envoyé par un premier équipement utilisateur UE desservi par la première station de base, dans lequel l'identifiant d'appariement comprend au moins un identifiant d'un second UE desservi par une seconde station de base ;
l'attente, par la première station de base, de la diffusion par la seconde station de base de l'identifiant d'appariement ;
la réception, par la première station de base, de l'identifiant d'appariement diffusé par la seconde station de base ;
l'envoi (102), par la première station de base, d'une demande d'appariement à la seconde station de base pour effectuer une reconfiguration de connexion de contrôle de ressources radio, RRC, de ressources radio afin d'établir une communication coopérative sur le second UE, dans lequel la demande d'appariement comprend au moins l'identifiant et des informations d'établissement de porteur pour le second UE, dans lequel l'identifiant du second UE est configuré pour déterminer le second UE au moyen de la seconde station de base ;
la réception (103), par la première station de base, d'un message d'accusé de réception d'appariement envoyé par la seconde station de base ; et
l'exécution (104), par la première station de base, d'une reconfiguration de connexion RRC afin d'établir une communication coopérative sur le premier UE.

2. Procédé selon la revendication 1, dans lequel le premier UE est un UE qui reçoit des données après avoir établi la communication coopérative, et le second UE est un UE qui aide le premier UE à recevoir les données après avoir établi la communication coopérative.

3. Procédé selon la revendication 1 ou 2, comprenant en outre :
la réception, par la seconde station de base, de l'identifiant d'appariement envoyé par le second UE, dans lequel l'identifiant d'appariement comprend au moins l'identifiant du second UE ;
la diffusion, par la seconde station de base, de l'identifiant d'appariement, dans lequel l'identifiant d'appariement est utilisé pour l'appariement de la seconde station de base avec la première station de base,
la réception (201), par la seconde station de base, d'une demande d'appariement envoyée par la première station de base, dans lequel la demande d'appariement comprend au moins un identifiant et des informations d'établissement de porteur pour le second UE desservi par la seconde station de base ;
l'envoi (202), par la seconde station de base, d'un message d'accusé de réception d'appariement à la première station de base ;
la détermination, par la seconde station de base, du second UE conformément à l'identifiant du second UE ; et
l'exécution (203), par la seconde station de base, d'une reconfiguration de connexion de contrôle de ressources radio RRC sur le second UE conformément aux informations d'établissement de porteur.

4. Procédé selon la revendication 1 ou 3, comprenant en outre :
la réception (301), par le premier UE desservi par une première station de base, d'un identifiant d'appariement envoyé par le second UE desservi par la seconde station de base, dans lequel l'identifiant d'appariement comprend au moins un identifiant du second UE desservi par la seconde station de base ;
l'envoi (302), par le premier UE, de l'identifiant d'appariement à la première station de base ; et
la réception (303), par le premier UE, d'un message de reconfiguration de connexion de contrôle de ressources radio RRC en provenance de la première station de base, et l'exécution d'une reconfiguration de connexion RRC.

5. Station de base (60), comprenant :
une unité de réception (61), configurée pour recevoir un identifiant d'appariement envoyé par un premier équipement utilisateur UE desservi par la station de base, dans laquelle l'identifiant d'appariement comprend au moins un identifiant d'un second UE desservi par une seconde station de base, l'unité de réception (61) étant configurée pour attendre la diffusion par la seconde station de base de l'identifiant d'appariement ; l'unité de réception (61) étant configurée pour recevoir l'identifiant d'appariement diffusé par la seconde station de base ;
une unité d'envoi (62), configurée pour envoyer une demande d'appariement à la seconde station de base pour effectuer une reconfiguration de connexion de contrôle de ressources radio, RRC, de ressources radio afin d'établir une communication coopérative sur le second UE, conformément à l'identifiant du second UE et à l'identifiant de la seconde station de base desservant le second UE, qui sont reçus par l'unité de réception (61), dans laquelle la demande d'appariement comprend au moins l'identifiant et des informations d'établissement de porteur pour le second UE, dans laquelle l'identifiant du second UE est configuré pour déterminer le second UE au moyen de la seconde station de base ;
dans laquelle l'unité de réception (61) est en outre configurée pour recevoir un message d'accusé de réception d'appariement envoyé par la seconde station de base ; et
une unité de reconfiguration (63), configurée pour effectuer une reconfiguration de connexion RRC afin d'établir une communication coopérative sur le premier UE après que l'unité de réception (61) a reçu le message d'accusé de réception d'appariement.

6. Station de base selon la revendication 5, dans laquelle le premier UE est un UE qui reçoit des données après avoir établi la communication coopérative, et le second UE est un UE qui aide le premier UE à recevoir les données après avoir établi la communication coopérative.

7. Station de base, comprenant :
une unité de réception (71), configurée pour recevoir un identifiant d'appariement envoyé par un second équipement utilisateur UE desservi par la station de base, dans laquelle l'identifiant d'appariement comprend au moins l'identifiant du second UE ;
une unité de diffusion (75), configurée pour diffuser l'identifiant d'appariement après la réception de l'identifiant d'appariement par l'unité de réception (71), dans laquelle l'identifiant d'appariement est utilisé pour l'appariement de la station de base avec une première station de base ;
dans laquelle l'unité de réception (71) est en outre configurée pour recevoir une demande d'appariement envoyée par la première station de base, dans laquelle la demande d'appariement comprend au moins un identifiant et des informations d'établissement de porteur du second UE desservi par la station de base ;
une unité d'envoi (72), configurée pour envoyer un message d'accusé de réception d'appariement à la première station de base conformément à la demande d'appariement reçue par l'unité de réception (71) ;
une unité de détermination (73), configurée pour déterminer le second UE conformément à l'identifiant du second UE contenu dans la demande d'appariement reçue par l'unité de réception (71) ;
une unité de reconfiguration (74), configurée pour effectuer, conformément aux informations d'établissement de porteur contenues dans la demande d'appariement reçue par l'unité de réception (71), une reconfiguration de connexion de contrôle de ressources radio RRC afin d'établir une communication coopérative sur le second UE déterminé par l'unité de détermination (73).
